# EUROPÄISCHE PATENTSCHRIFT

(11) **EP 0 590 748 B1**
(45) Veröffentlichungstag und Bekanntmachung des Hinweises auf die Patenterteilung: **21.01.1998**
(21) Anmeldenummer: 93250346.9
(22) Anmeldetag: 25.07.1990
(51) Int. Cl.: B29C 45/14, B27N 7/00, B29C 70/00

(54) **Pressverfahren zum Herstellen von kaschierten Formteilen**
Method of pressing for the production of lined moulded articles
Procédé de pressage pour fabriquer des objets moulés et revêtus

(30) Priorität: 26.07.1989 DE 3924751; 19.07.1990 DE 4023209
(43) Veröffentlichungstag der Anmeldung: 06.04.1994
(62) Teilanmeldung aus: 90250191.5
(73) Patentinhaber: LIGNOTOCK GmbH, D-36205 Sontra (DE)
(72) Erfinder: Nicolay, Albert, Dr., D-37276 Meinhard (DE)
(74) Vertreter: Pfenning, Meinig & Partner

(56) Entgegenhaltungen:
- DE-A- 1 404 507
- FR-A- 2 546 808
- GB-A- 816 696
- US-A- 3 256 375
- US-A- 3 914 475
- DATABASE WPI Section Ch, Week 7543, Oktober 1975 Derwent Publications Ltd., London, GB; Class A, AN 75-71480W [43] & JP-A-50 051 158 (MITSUBISHI PETROCH KK) 7. Mai 1975

## Beschreibung

Die Erfindung betrifft ein Preßverfahren zum Herstellen von kaschierten Formteilen gemäß dem Oberbegriff des Anspruchs 1.

Es ist bekannt, Formteile unter Verwendung von Haftvermittlern mit thermoplastisch verformbaren Folien, vorzugweise durch Ansaugen der erwärmten Thermoplastfolie an Trägerteile, zu kaschieren. Hierfür werden die Trägerteile und/oder die Folie haftmittelbeschichtet. Auch für den Fall, daß mehrere Beschichtungswerkstoffe vorgesehen sind, wurde bisher dieses Verfahren beibehalten. Insbesondere wird dann, wenn in eine Folienkaschierung ein Stoffinsert einzusetzen ist, zunächst dieses Insert als Zuschnitt mit Hilfe eines Haftvermittlers aufkaschiert, danach das ganze Formteil mit einer Thermoplastfolie mittels des genannten Vakuumtiefziehverfahrens überkaschiert und in einem nachfolgenden Arbeitsgang Folie und Gewebe am Umriß des Stoffinserts verschweißt, falls das Gewebe schweißbar ist. Vorteilhaft bedient man sich in diesem Zusammenhang der Hochfrequenzschweißung. Anschließend wird dann die Folie über dem Gewebe entfernt, wobei dieser Vorgang als sogenanntes Spiegelreißen bezeichnet wird. Dieses Verfahren ist aufwendig und abfallintensiv. Es ist darüber hinaus nur dann anzuwenden, wenn beide Kaschierwerkstoffe schweißfähig sind. Auch sind Verfahren bekannt geworden, bei denen der Abfall dadurch reduziert wurde, daß die unterschiedlichen Kaschierwerkstoffe vor dem Kaschieren vorverbunden werden (EP 0 145 832). Schließlich werden bei einem weiteren bekannten Verfahren zwei Zuschnitte der unterschiedlichen Kaschierwerkstoffe während des Kaschierens durch besondere Haltevorrichtungen auf dem Formteil fixiert (DE-OS 31 09 338), wobei die Thermoplastkaschierung eine vorgefertigte Folie, aus der Zuschnitte angefertigt werden, ist, so daß hierdurch möglichst Material eingespart werden kann. Dabei können aber erhebliche Produktionsabfälle auftreten. In den bekannten Fällen wird unter Zuhilfenahme eines Haftvermittlers der Kaschiervorgang ausgeführt, was sowohl die Produktionskosten erhöht als auch im Falle lösungsmittelhaltiger Haftvermittler umweltbelastende Auswirkungen hat. Zur Kaschierung mit Thermoplastfolien werden fast ausschließlich PVC-Folien verwendet, die wegen der Weichmacherausdünstungen und wegen ihrer Umweltschädlichkeit nur sehr kostenaufwendig beseitigt werden können. Maßgebend für ihren Einsatz ist dabei ihre hervorragende Schweißfähigkeit, die vor allem beim Kaschieren mit unterschiedlichen Werkstoffen entlang der Trennlinie die Ausbildung von sauberen Schweißverbindungen und Ziernähten ermöglicht. Der an sich wünschenwerte Einsatz von Alternativwerkstoffen scheiterte bisher vor allem an ihrer mangelnden Schweißbarkeit.

Es ist weiterhin bekannt, ganz oder teilweise mit Kunststoff oder Holzfurnieren ummantelte, profilierte Teile, insbesondere profilierte Leisten herzustellen, bei dem die Teile aus einem Kern aus durch Bindemittel, vorzugsweise miteinander verbundenen Faserstoffen, zum Beispiel Spanholz und einer Deckschicht aus wärmehärtbaren Kunststoffolien oder einem Holzfurnier besteht (DE-A-1 404 507). Dieses Verfahren hat den Nachteil, daß wärmehärtbare Kunststoffolien nicht oder sehr begrenzt tiefziehfähig ist. Sie ist daher nicht geeignet für Anwendungen bei Teilen mit komplexen Raumformen, wie sie bei Innenverkleidungen von Automobilen heute üblich sind.

Aus der GB-A-816 696 ist ein Verfahren zum Beschichten von Sperrholz- oder Holzfaserplatten mit einem Thermoplastmaterial bekannt. Dieses wird in Pulver- oder Granulatform gleichmäßig auf die Platte aufgestreut und dann mit einer Zwischenlage bei etwa 170° C gegen die Platte gepreßt. Bei dieser Temperatur findet ein Fließen des Thermoplastmaterials statt. Dieses Verfahren ist nur für die Beschichtung von ebenen Platten, nicht jedoch von Formteilen geeignet. Das Fließen des Thermoplastmaterials erfolgt nur in dem Maße, daß die Teilchen eingeebnet und miteinander verpreßt werden.

Ausgehend von diesem Stand der Technik ist es die Aufgabe der vorliegenden Erfindung, bei der Kaschierung von Formteilen nach dem Verfahren der gattungsmäßigen Art unter wenigstens teilweiser Verwendung von wärmehärtbaren Kaschierwerkstoffen den Abfall zu reduzieren, den Ersatz der problematischen PVC-Werkstoffe durch andere Kaschierwerkstoffe zu ermöglichen und die Kosten der Formteilfertigung insgesamt zu senken.

Diese Aufgabe wird erfindungsgemäß gelöst durch die im kennzeichnenden Teil des Anspruchs 1 angegebenen Merkmale. Vorteilhafte Ausgestaltungen und Weiterbildungen dieses Verfahrens ergeben sich aus den Unteransprüchen.

Dadurch, daß die Kaschierung des Formteils so erfolgt, daß eine noch nicht vernetzte Polymermenge, die durch die gewünschte Dicke der herzustellenden Kaschierung vorgegeben werden kann, in die eine Hälfte eines Preßwerkzeuges eingebracht wird, in das das zu kaschierende Formteil eingelegt wurde, ergibt sich beim Schließen des Werkzeuges unter Druckbeaufschlagung die abfallose Verteilung des in noch nicht vernetztem (gehärtetem) Zustand befindlichen Duromers, dessen Viskosität erheblich geringer ist als die begrenzte Fließfähigkeit vorverfestigter Folien oder partikelförmiger Thermoplaste. Hierbei ist es vorteilhaft, wenigstens diejenige Werkzeughälfte der Presse, die mit dem Polymer beaufschlagt wird, zu beheizen und/oder das Trägerteil selbst auf eine entsprechende Temperatur von 120° bis 180° C zu erwärmen. Beim Schließen der Presse wird das Polymer auf der späteren Sichtseite des Formteils über diese verteilt, wobei die erhöhte Temperatur der zugehörigen Werkzeughälfte bzw. des Trägerteils die Viskosität des Polymers nochmals derart herabsetzt, daß auch relativ große Oberflächenbereiche des Trägerteils mit sehr dünnen Kaschierüberzügen beaufschlagt werden können. Die erhöhte Temperatur sorgt darüber hinaus für eine beachtliche Verkürzung der Vernetzungszeit des Kunststoffes. Grundsätzlich sind für diese Art der Kaschierung von Trägerteilen alle handelsüblichen Duromere verwendbar. Es ist jedoch besonders vorteilhaft, hierfür Elastomere einzusetzen, da diese bezüglich ihrer Oberflächeneigenschaften wie angenehme Griffigkeit, Rißunanfälligkeit auch bei starker mechanischer Belastung den modernen Marktanforderungen optimal entsprechen. Die vorstehend erwähnte gute Griffigkeit der Elastomerwerkstoffe kann noch dadurch erhöht werden, daß diesen schaumtreibende Mittel beigegeben werden, die beispielsweise im Bereich der Armlehnen für einen ausreichenden Polstereffekt Sorge tragen. Die Gasdurchlässigkeit der Holzfaserwerkstoffe, aus denen die Trägerteile gefertigt sind, begünstigt hier zusätzlich das lunkerfreie Aufschäumen solcher Polsterbereiche.

Schließlich ist es noch ein weiterbildendes Merkmal dieser Verfahrensweise, das Polymer erst dann in ein Werkzeug einzubringen, nachdem dessen sichtseitige Oberfläche mit einer Lackschicht versehen worden ist und diese eine ausreichende Vortrocknung erfahren hat. Hierbei wird vorteilhaft ein Lack verwendet, der ausreichende Affinität zu dem betreffenden Polymer aufweist, also nach geeigneter Vortrocknung eine ausrelchende Klebeverbindung mit dem durch Druckverteilung über die Sichtseite des Trägerteils verteilten Polymers eingeht. Der besondere Vorteil dieses Vorgehens liegt darin, daß man die Oberflächeneigenschaften des beschichteten Formteils von den Werkstoffeigenschaften des Beschichtungspolymers trennen kann. Der Optimierungsspielraum des erfindungsgemäßen Verfahrens wird hierdurch wesentlich erweitert.

Die Verwendung einer vorgetrockneten, das heißt klebefähigen Lackbeschichtung einer Werkzeughälfte, bietet zusammen mit Trägerteilen, die auch in der Wärme formstabil sind, den zusätzlichen Vorteil, daß vorzeitiges Entformen des beschichteten Formteils möglich ist, auch dann, wenn die eigentliche Polymerbeschichtung noch nicht voll ausgehärtet ist. Die Formstabilität wird durch das Trägerteil in diesem Fall sichergestellt, die vorgetrocknete Lackschicht schützt die noch nicht voll ausgehärtete Polymeroberfläche. Die auf diese Weise ermöglichte Taktzeitverkürzung stellt einen wesentlichen wirtschaftlichen Vorteil des erfindungsgemäßen Verfahrens dar.

## Patentansprüche

1. Preßverfahren zum Herstellen von kaschierten Formteilen zur Innenverkleidung der Fahrgastzellen von Automobilen, bestehend aus einem temperaturunabhängig formstabilen Trägerteil aus bindemittelhaltigen verpreßten Holzfaserwerkstoffen oder dergleichen und einer sichtseitigen, festhaftend mit dem Trägerteil verbundenen, gegebenenfalls mehrteiligen Kaschierung, wobei die Kaschierung wenigstens in Teilabschnitten aus einem formbaren Kunststoff besteht,
**dadurch gekennzeichnet,**
daß die Kunststoffkaschierung durch Eindosieren eines noch nicht vernetzten Polymers einer durch die gewünschte Dicke der Kaschierung vorgegebenen Polymerportion in die eine Hälfte einer aus Matrize und Patrize bestehenden Presse zusammen mit dem Trägerteil eingebracht und das Polymer durch Schließen der Werkzeughälften über wenigstens Teilbereiche der Sichtseite des Trägerteils druckverteilt wird.

2. Verfahren nach Anspruch 1, dadurch gekennzeichnet, daß wenigstens die die Sichtseite vorgebende Werkzeughälfte und/oder das Trägerteil auf 120 bis 180° erwärmt werden.

3. Verfahren nach Anspruch 1, dadurch gekennzeichnet, daß als Polymer ein Elastomer verwendet wird.

4. Verfahren nach Anspruch 1, dadurch gekennzeichnet, daß dem Elastomer ein Schaumtreibmittel beigegeben wird.

5. Verfahren nach Anspruch 1 bis 4, dadurch gekennzeichnet, daß die die Sichtseite des Formteils vorgebende Werkzeughälfte vor dem Einbringen des Polymers mit einer Lackschicht beaufschlagt wird, die nach Vortrocknung mit dem Polymer Klebverbindung eingeht.

## Claims

1. Pressing method for the production of lined shapes for interior lining of passenger cabins of automobiles, comprising a temperature-independent shape-retaining support element of bonding agent containing pressed wood-fibre materials or the like and on the visible side a lining, if appropriate of a plurality of parts, which firmly adheres to the support element, and the lining is at least in parts composed of a mouldable plastic material, **characterised in that** the plastic lining is, by adding an apportioned volume of a not yet interlaced polymer of a polymer portion as dictated by the desired thickness of the lining into the one half of a press comprising a matrix and a patrix, entered together with the support element and the polymer is distributed under pressure by closing the tool halves over at least partial areas of the visible side of the support element.

2. Process according to Claim 1, **characterised in that** at least the tool half which represents the visible side and/or the support element are heated to between 120 and 180°.

3. Process according to Claim 1, **characterised in that** an elastomer is used as a polymer.

4. Process according to Claim 1, **characterised in that** a foam propellant is added to the elastomer.

5. Process according to Claim 1 to 4, **characterised in that** the tool half which represents the visible side of the shape is, prior to delivery of the polymer, given a lacquer coat which after pre-drying enters into an adhesive bond with the polymer.

## Revendications

1. Procédé de pressage pour la fabrication d'objets moulés et revêtus pour l'habillage intérieur d'habitacles des véhicules automobiles, comprenant une pièce de support présentant une forme stable indépendamment de la température et formée de pâtes mécaniques pressées contenant un liant, ou analogues, et un revêtement situé sur la face visible et relié de manière à adhérer fermement à la pièce de support et éventuellement formé de plusieurs éléments, le revêtement étant constitué au moins dans des sections partielles, par une matière plastique déformable, caractérisé en ce qu'on introduit le revêtement en matière plastique, par dosage en entrée d'un polymère non encore réticulé d'une partie polymère prédéterminée par l'épaisseur désirée du revêtement, conjointement avec la pièce de support, dans une moitié d'une presse constituée d'une matrice et d'un poinçon, et que le polymère est réparti sous pression par fermeture des moitiés de l'outil, sur au moins des zones partielles de la face visible de la pièce de support.

2. Procédé selon la revendication 1, caractérisé en ce qu'on chauffe entre 120 et 180° au moins la moitié de l'outil, qui prédétermine la face visible, et/ou la pièce de support.

3. Procédé selon la revendication 1, caractérisé en ce qu'on utilise un élastomère comme polymère.

4. Procédé selon la revendication 1, caractérisé en ce qu'on ajoute un agent moussant à l'élastomère.

5. Procédé les revendications 1 à 4, caractérisé par le fait qu'avant l'introduction du polymère, on charge la moitié de l'outil, qui prédétermine la face visible de l'objet moulé, avec une couche de laque, qui intervient dans la liaison collée avec le polymère, après un séchage préalable.
